# FASCICULE DE BREVET EUROPEEN

(11) **EP 4 222 366 B1**
(45) Date de publication et mention de la délivrance du brevet: **14.10.2026**
(21) Numéro de dépôt: 21798418.6
(22) Date de dépôt: 28.09.2021
(51) Int. Cl.: F02M 21/02, F02M 21/06, F17C 5/02, F02B 73/00, F17C 9/00, F25J 1/00, F17C 9/04, F25J 1/02

(54) **SYSTÈME D'ALIMENTATION EN GAZ POUR APPAREILS CONSOMMATEURS DE GAZ À HAUTE ET BASSE PRESSION**
GASVERSORGUNGSANLAGE FÜR HOCH- UND NIEDERDRUCK-GASVERBRAUCHSGERÄTE
GAS SUPPLY SYSTEM FOR HIGH AND LOW PRESSURE GAS CONSUMING APPARATUS

(30) Priorité: 02.10.2020 FR 2010112; 30.06.2021 FR 2107081
(43) Date de publication de la demande: 09.08.2023
(73) Titulaire: GAZTRANSPORT ET TECHNIGAZ, 78470 Saint-Rémy-lès-Chevreuse (FR)
(72) Inventeur: AOUN, Bernard, 78470 SAINT REMY LES CHEVREUSE (FR); NARME, Romain, 78470 SAINT REMY LES CHEVREUSE (FR)
(74) Mandataire: Ex Materia
(86) Numéro de dépôt international: PCT/FR2021/051677
(87) Numéro de publication internationale: WO 2022/069833

(56) Documents cités:
- EP-A1- 3 252 297
- WO-A1-2017/162977
- WO-A1-2017/162977
- KR-A- 20140 138 018
- KR-A- 20140 138 018

## Description

La présente invention se rapporte au domaine des navires de stockage et/ou de transport de gaz à l'état liquide et concerne plus particulièrement un système d'alimentation en gaz pour appareils consommateurs compris au sein de tels navires.

Au cours d'un trajet effectué par un navire comprenant une cuve de gaz à l'état liquide destiné à être consommé et/ou à être livré vers un point de destination, ledit navire peut être apte à utiliser au moins une partie dudit gaz à l'état liquide afin d'alimenter au moins l'un de ses moteurs, et ce via un système d'alimentation en gaz. C'est le cas des navires pourvus d'un moteur de propulsion de type ME-GI. Afin d'alimenter ce type de moteur, le gaz doit être comprimé à très haute pression par des compresseurs spéciaux aptes à comprimer le gaz jusqu'à 300 bars tel que cela est le cas dans le document KR20140138018, mais de tels compresseurs sont chers, engendrent des frais de maintenance conséquents et induisent des vibrations au sein du navire.

Une alternative à l'installation de ces compresseurs à haute pression est de vaporiser le gaz sous forme liquide à 300 bars avant que ce dernier ne soit envoyé au moteur de propulsion. Une telle solution ne permettant pas d'éliminer le gaz sous forme vapeur (ou BOG, qui en anglais signifie « boil-off gas ») se formant naturellement au sein d'une cuve contenant au moins partiellement la cargaison, des compresseurs basse pression peuvent être installés pour alimenter un moteur auxiliaire, capable de consommer le gaz sous forme vapeur à basse pression. En revanche, sous une telle configuration, si le gaz sous forme vapeur est présent en trop grande quantité, ou plus généralement en quantité supérieure à un besoin de consommation du moteur auxiliaire, le gaz sous forme vapeur non consommé par le moteur auxiliaire est alors accumulé sous forme de pression dans la cuve dans une certaine limite, puis éliminé par combustion ou en dernier ressort par largage dans l'atmosphère. Une élimination de la sorte engendre un gaspillage de carburant, ainsi que des conséquences dommageables pour l'environnement.

La présente invention permet d'éliminer une telle perte en proposant un système d'alimentation en gaz d'au moins un appareil consommateur de gaz à haute pression et d'au moins un appareil consommateur de gaz à basse pression d'un ouvrage flottant comprenant au moins une cuve configurée pour contenir le gaz, le système d'alimentation comprenant :
- au moins un premier circuit d'alimentation en gaz de l'appareil consommateur de gaz à haute pression, comprenant au moins une pompe configurée pour pomper le gaz prélevé à l'état liquide dans la cuve,
- au moins un évaporateur haute pression configuré pour évaporer le gaz circulant dans le premier circuit d'alimentation en gaz,
- au moins un deuxième circuit d'alimentation en gaz de l'appareil consommateur de gaz à basse pression, comprenant au moins un compresseur configuré pour comprimer du gaz prélevé à l'état vapeur dans la cuve jusqu'à une pression compatible avec les besoins de l'appareil consommateur de gaz à basse pression,
caractérisé en ce que le système d'alimentation comprend une ligne de retour de gaz connectée au deuxième circuit d'alimentation en aval du compresseur et s'étendant jusqu'à la cuve, le système d'alimentation comprenant au moins un premier échangeur de chaleur et au moins un deuxième échangeur de chaleur chacun configurés pour opérer un échange de chaleur entre le gaz circulant dans la ligne de retour à l'état vapeur et le gaz à l'état liquide circulant dans le premier circuit d'alimentation, le premier circuit d'alimentation comprenant une pompe additionnelle interposée entre le premier échangeur de chaleur et le deuxième échangeur de chaleur.

Grâce à un tel système d'alimentation, le gaz à l'état vapeur présent dans la cuve et non utilisé pour la consommation de l'appareil consommateur de gaz à basse pression peut être condensé et est ainsi renvoyé dans la cuve à l'état liquide, au lieu d'être éliminé. La perte du gaz à l'état vapeur présent en excès dans la cuve est alors au moins réduite.

Le premier circuit d'alimentation en gaz permet de subvenir aux besoins en carburant de l'appareil consommateur de gaz à haute pression. Ce dernier peut par exemple être le moyen de propulsion de l'ouvrage flottant, par exemple un moteur ME-GI. Le premier circuit d'alimentation s'étend de la cuve jusqu'à l'appareil consommateur de gaz à haute pression. La pompe est installée en fond de cuve et assure le pompage du gaz à l'état liquide afin que celui-ci puisse circuler dans le premier circuit d'alimentation.

Le gaz devant être à l'état vapeur pour pouvoir alimenter l'appareil consommateur de gaz à haute pression, l'évaporateur haute pression garantit l'évaporation du gaz avant sa fourniture à l'appareil consommateur de gaz à haute pression. L'évaporateur haute pression est le siège d'un échange de calories entre le gaz à l'état liquide circulant dans le premier circuit d'alimentation et un fluide caloporteur, par exemple de l'eau glycolée, de l'eau de mer ou de la vapeur d'eau. Cette dernière doit être à une température suffisamment élevée pour créer un changement d'état du gaz afin que ce dernier passe à l'état vapeur ou supercritique afin d'alimenter l'appareil consommateur de gaz à haute pression.

Avant que le gaz à l'état liquide circulant dans le premier circuit d'alimentation ne soit vaporisé par le biais de l'évaporateur haute pression, le gaz à l'état liquide traverse le premier échangeur de chaleur, puis le deuxième échangeur de chaleur. Pour cela, le premier échangeur de chaleur et le deuxième échangeur de chaleur sont liés l'un à l'autre par une portion du premier circuit d'alimentation afin que le gaz à l'état liquide puisse traverser les deux échangeurs de chaleur de manière successive. La température dudit gaz à l'état liquide tend ainsi à augmenter avant le passage de celui-ci à travers l'évaporateur haute pression. Ainsi, le gaz circulant dans le premier circuit d'alimentation peut être dans un état diphasique en sortie du deuxième échangeur de chaleur.

D'une manière générale, le gaz contenu dans la cuve peut passer de manière naturelle, ou forcée par l'ouvrage flottant, à l'état vapeur. Le gaz au sein de la cuve passant à l'état vapeur doit être évacué afin de ne pas créer de surpression au sein de la cuve.

Une telle fonction est assurée par le deuxième circuit d'alimentation en gaz de l'appareil consommateur de gaz à basse pression. Un tel deuxième circuit d'alimentation s'étend de la cuve jusqu'à l'appareil consommateur de gaz à basse pression. Ce dernier peut par exemple être un moteur auxiliaire tel qu'un générateur électrique. Le compresseur disposé sur le deuxième circuit d'alimentation est chargé d'aspirer le gaz présent dans le ciel de la cuve afin de pouvoir à la fois alimenter l'appareil consommateur de gaz à basse pression, mais aussi de réguler la pression au sein de la cuve.

En sortie du compresseur, le gaz à l'état vapeur peut alimenter l'appareil consommateur de gaz à basse pression, ou circuler à travers la ligne de retour si l'appareil consommateur de gaz à basse pression ne nécessite pas d'apport en carburant. La ligne de retour étant connectée en aval du compresseur, le gaz à l'état vapeur aspiré par le compresseur peut donc y circuler.

Le gaz à l'état vapeur circulant dans la ligne de retour traverse dans un premier temps le deuxième échangeur de chaleur, puis le premier échangeur de chaleur, avant de retourner dans la cuve. Grâce à l'échange de calories s'opérant entre le gaz à l'état liquide circulant dans le premier circuit d'alimentation et le gaz à l'état vapeur circulant dans la ligne de retour, la température du gaz à l'état vapeur diminue en traversant les échangeurs de chaleur, jusqu'à ce que ledit gaz se condense et repasse à l'état liquide sensiblement en sortie du premier échangeur de chaleur. Le gaz recondensé circule alors jusqu'à la cuve.

Selon un exemple, le premier échangeur de chaleur et le deuxième échangeur de chaleur sont en amont de l'évaporateur haute pression le long du premier circuit d'alimentation. On garantit ainsi que le gaz est à l'état liquide dans la partie du premier circuit d'alimentation qui se situe au sein du premier échangeur de chaleur et au sein du deuxième échangeur de chaleur.

Selon une caractéristique de l'invention, le premier échangeur de chaleur, le deuxième échangeur de chaleur et l'évaporateur haute pression sont des échangeurs thermiques physiquement distincts.

La pompe additionnelle permet d'augmenter la pression du gaz à l'état liquide circulant dans le premier circuit d'alimentation, et ce afin que celui-ci présente une pression compatible pour l'alimentation de l'appareil consommateur de gaz à haute pression.

Le positionnement de la pompe additionnelle entre les deux échangeurs de chaleur est particulièrement avantageux. En effet, mettre en place la pompe additionnelle en amont du premier échangeur de chaleur entraîne une élévation de la pression et de la température du gaz à l'état liquide dès la traversée du premier échangeur de chaleur, ce qui nuit à la condensation du gaz à l'état vapeur circulant dans la ligne de retour et traversant également le premier échangeur de chaleur. Par ailleurs, le gaz circulant dans le premier circuit d'alimentation pouvant être en un état diphasique en sortie du deuxième échangeur de chaleur, disposer la pompe additionnelle en aval du deuxième échangeur de chaleur peut nuire au bon fonctionnement de cette dernière étant donné que la pompe additionnelle ne permet le pompage que d'un fluide à l'état liquide. La disposition optimale consiste donc à mettre en place la pompe additionnelle entre les deux échangeurs de chaleur.

Selon une caractéristique de l'invention, la ligne de retour peut comprendre un point de divergence divisant la ligne de retour en une première section et en une deuxième section s'étendant toutes deux du point de divergence jusqu'à la cuve, le premier échangeur de chaleur étant configuré pour opérer un échange de chaleur entre le gaz circulant à l'état vapeur dans la première section de la ligne de retour et le gaz à l'état liquide circulant dans le premier circuit d'alimentation, la deuxième section contournant le premier échangeur de chaleur. La division de la ligne de retour en deux sections distinctes correspond à un deuxième mode de réalisation du système d'alimentation selon l'invention, un premier mode de réalisation correspondant à un système d'alimentation tel que décrit précédemment, c'est-à-dire avec une ligne de retour ne présentant pas de point de divergence ni de division en deux sections.

Selon ce deuxième mode de réalisation, le gaz à l'état vapeur présent dans la cuve et non utilisé pour la consommation de l'appareil consommateur de gaz à basse pression peut être condensé en circulant via la première section de la ligne de retour et est ainsi renvoyé dans la cuve à l'état liquide, au lieu d'être éliminé.

De plus, lorsque le débit de gaz à l'état liquide circulant dans le premier circuit d'alimentation n'est pas suffisant pour condenser la totalité du gaz à l'état vapeur circulant dans la ligne de retour, la fraction excédentaire de ce dernier peut être dirigé vers la deuxième section de la ligne de retour afin de retourner directement dans la cuve. Une telle situation peut survenir lorsque l'ouvrage flottant équipé du système d'alimentation selon l'invention ne nécessite pas une quantité importante de gaz à l'état liquide pour être propulsé, par exemple lorsque l'ouvrage flottant se déplace à vitesse réduite. A l'exception de la spécificité de la ligne de retour suscitée, le premier mode de réalisation et le deuxième mode de réalisation présentent des caractéristiques identiques.

Il a été déterminé par les inventeurs qu'une condensation complète du gaz à l'état vapeur circulant dans la ligne de retour n'était possible que lorsque la quantité de gaz à l'état liquide circulant dans le premier circuit d'alimentation est supérieure ou égale à six fois la quantité de gaz à l'état vapeur circulant dans la ligne de retour. Un tel exemple est applicable lorsque le compresseur comprime le gaz à l'état vapeur à environ 10 bars, mais le ratio peut changer en fonction de la pression délivrée par le compresseur. Si cette condition est respectée, le gaz à l'état vapeur circule alors au sein de la première section de la ligne de retour pour être condensé. Si la quantité de gaz à l'état liquide circulant dans le premier circuit d'alimentation est inférieure à six fois la quantité de gaz à l'état vapeur circulant dans la ligne de retour, alors il est avantageux de faire circuler le gaz à l'état vapeur au moins partiellement au sein de la deuxième section de la ligne de retour, une partie du gaz à l'état vapeur circulant alors dans la première section en quantité telle que la condensation soit intégrale.

Le gaz à l'état vapeur circulant dans la ligne de retour peut circuler dans la première section ou dans la deuxième section à partir du point de divergence. Si le gaz à l'état vapeur circule dans la première section, celui-ci traverse dans un premier temps le deuxième échangeur de chaleur, puis le premier échangeur de chaleur, avant de retourner dans la cuve. Selon cette configuration, grâce à l'échange de calories s'opérant entre le gaz à l'état liquide circulant dans le premier circuit d'alimentation et le gaz à l'état vapeur circulant dans la ligne de retour, la température du gaz à l'état vapeur diminue en traversant les deux échangeurs de chaleur, jusqu'à ce que ledit gaz se condense et repasse à l'état liquide sensiblement en sortie du premier échangeur de chaleur. Le gaz condensé circule alors jusqu'à la cuve. Si le gaz à l'état vapeur circule dans la deuxième section, celui-ci traverse le deuxième échangeur de chaleur, puis retourne directement dans la cuve. Selon cette configuration, la température du gaz à l'état vapeur diminue du fait de l'échange de calories opéré au sein du deuxième échangeur de chaleur, mais n'est toutefois pas condensé. Le gaz retourne ainsi dans la cuve à l'état vapeur, mais en étant néanmoins refroidi.

Selon une caractéristique de l'invention, le point de divergence peut être disposé sur la ligne de retour entre le premier échangeur de chaleur et le deuxième échangeur de chaleur. Autrement dit, le gaz à l'état vapeur circule au sein de la première section ou de la deuxième section après avoir traversé le deuxième échangeur de chaleur. Plus particulièrement, c'est une section principale de la ligne de retour qui traverse le deuxième échangeur de chaleur, ladite section principale correspondant à la section de la ligne de retour en amont du point de divergence par rapport à un sens de circulation du gaz à l'état vapeur. Une telle caractéristique est relative au deuxième mode de réalisation du système d'alimentation tel qu'évoqué précédemment.

Selon une caractéristique de l'invention, le point de divergence peut être disposé sur la ligne de retour, entre la connexion au deuxième circuit d'alimentation et le deuxième échangeur de chaleur, la première section et la deuxième section traversant le deuxième échangeur de chaleur. Il s'agit d'un troisième mode de réalisation du système d'alimentation selon l'invention. Selon ce troisième mode de réalisation, le point de divergence est agencé en amont du deuxième échangeur de chaleur. Ce dernier étant configuré pour opérer un échange de chaleur notamment avec le gaz à l'état vapeur de la ligne de retour, chaque section parmi la première section et la deuxième section traverse le deuxième échangeur de chaleur. Le deuxième échangeur de chaleur comprend ainsi au moins trois passes, soit deux passes pour chacune des sections de la ligne de retour en plus de la passe au sein de laquelle circule le gaz à l'état liquide du premier circuit d'alimentation.

Selon une caractéristique de l'invention, la deuxième section de la ligne de retour comprend une extrémité immergée dans le liquide contenu dans la cuve, la deuxième section comprenant un organe d'éjection disposé au niveau de l'extrémité immergée. L'organe d'éjection permet notamment de détendre le gaz à l'état vapeur circulant dans la deuxième section de la ligne de retour avant que ce dernier soit dispersé dans la cuve. La détente du gaz à l'état vapeur, associée au fait que l'extrémité immergée est préférentiellement agencée en fond de cuve, permet de liquéfier au moins une partie du gaz à l'état vapeur lorsque ce dernier retourne dans la cuve, entraînant également une hausse de température du gaz sous forme liquide présent dans la cuve. L'organe d'éjection peut par exemple être un éjecteur ou un dispositif de bullage.

Selon une caractéristique de l'invention, la deuxième section de la ligne de retour comprend un organe de régulation de débit. L'organe de régulation de débit peut par exemple être une valve agencée en aval du deuxième échangeur de chaleur dans le cas où ce dernier est lui-même disposé en aval du point de divergence. L'organe de régulation de débit peut également faire office de détendeur. Dans le cas où la deuxième section de la ligne de retour est pourvue d'un organe d'éjection tel que décrit précédemment, l'organe de régulation de débit est choisi de manière à limiter la détente du gaz à l'état vapeur.

Selon une caractéristique de l'invention, le premier échangeur de chaleur est configuré pour condenser le gaz circulant au sein de la ligne de retour. Le premier échangeur de chaleur est l'échangeur traversé par le gaz à l'état liquide du premier circuit d'alimentation lorsque ledit gaz à l'état liquide est à sa température la plus basse. C'est donc l'échange de calories se déroulant au sein du premier échangeur de chaleur qui va changer l'état du gaz circulant dans la ligne de retour pour le faire passer de l'état vapeur à l'état liquide. Dans le cas où la ligne de retour est divisée en deux sections, par exemple selon le deuxième mode de réalisation ou le troisième mode de réalisation, seul le gaz circulant au sein de la première section de la ligne de retour est condensé, le gaz circulant dans la deuxième section de la ligne de retour contournant le premier échangeur de chaleur.

Selon une caractéristique de l'invention, le deuxième échangeur de chaleur est configuré pour pré-refroidir le gaz circulant au sein de la ligne de retour. En sortie du premier échangeur de chaleur, le gaz à l'état liquide circulant dans le premier circuit d'alimentation est moins froid qu'à l'entrée du premier échangeur de chaleur, un échange de chaleur ayant servi à condenser le gaz à l'état vapeur de la ligne de retour. Par la suite, le gaz à l'état liquide est compressé par la pompe additionnelle puis traverse le deuxième échangeur de chaleur. Il s'opère également un échange de calories au sein du deuxième échangeur de chaleur, permettant le pré-refroidissement du gaz à l'état vapeur au sein de la ligne de retour. Même si le débit de gaz à l'état liquide circulant dans le premier circuit d'alimentation est insuffisant pour opérer une condensation totale du gaz à l'état vapeur circulant dans la ligne de retour, un refroidissement est toutefois opéré au sein du deuxième échangeur de chaleur.

Selon une caractéristique de l'invention, la ligne de retour comprend un organe de détente disposé en aval du premier échangeur de chaleur. L'organe de détente permet d'abaisser la pression du gaz circulant dans la ligne de retour, une fois celui-ci condensé lors de son passage à travers le premier échangeur de chaleur. Grâce à l'organe de détente, le gaz à l'état liquide est renvoyé dans la cuve à une température proche de la température de l'équilibre liquide -vapeur du GNL. L'organe de détente a pour rôle également de réguler le débit de gaz à condenser circulant dans la ligne de retour. Dans le cas où la ligne de retour est divisée en deux sections, l'organe de détente est positionné au niveau de la première section de la ligne de retour, toujours en aval du premier échangeur de chaleur.

Selon une caractéristique de l'invention, le système d'alimentation comprend une ligne d'alimentation auxiliaire connectée au premier circuit d'alimentation, en amont du premier échangeur de chaleur, et s'étendant jusqu'au deuxième circuit d'alimentation, en aval du compresseur, le système d'alimentation comprenant un évaporateur basse pression configuré pour évaporer le gaz circulant dans la ligne d'alimentation auxiliaire. Une telle ligne d'alimentation auxiliaire est utilisée lorsque l'appareil consommateur de gaz à basse pression nécessite d'être alimenté en gaz à l'état vapeur, mais que ce dernier n'est pas en quantité suffisante au sein du ciel de cuve. La ligne d'alimentation auxiliaire permet ainsi de dériver une partie du gaz à l'état liquide circulant dans le premier circuit d'alimentation. Cette partie est alors évaporée par l'évaporateur basse pression, selon un fonctionnement similaire à celui de l'évaporateur haute pression, c'est-à-dire par échange de chaleur avec un fluide caloporteur comme de l'eau glycolée, de l'eau de mer ou de la vapeur d'eau, par exemple. L'évaporateur basse pression induit ainsi un échange de calories entre le gaz à l'état liquide circulant dans la ligne d'alimentation auxiliaire et ce fluide caloporteur.

Une fois passé à l'état vapeur, le gaz continue de circuler au sein de la ligne d'alimentation auxiliaire et rejoint le deuxième circuit d'alimentation afin d'alimenter l'appareil consommateur de gaz à basse pression.

Si du gaz à l'état vapeur est présent en quantité suffisante dans le ciel de cuve, alors la ligne d'alimentation auxiliaire n'est pas utilisée et peut par exemple être fermée par une vanne.

Selon une caractéristique de l'invention, la pompe est configurée pour élever une pression du gaz à l'état liquide à une valeur comprise entre 6 et 17 bars et la pompe additionnelle est configurée pour élever la pression du gaz à l'état liquide à une valeur comprise entre 30 et 400 bars. De telles gammes de pression permettent d'élever le gaz à l'état liquide à une pression compatible avec chacun des appareils consommateurs de gaz.

La pompe additionnelle permet d'élever la pression du gaz à l'état liquide à une valeur comprise entre 30 et 400 bars, notamment pour un usage avec de l'ammoniaque et ou de l'hydrogène, entre 30 et 70 bars pour un usage avec du gaz de pétrole liquéfié, et de préférence entre 150 et 400 bars pour un usage avec de l'éthane, de l'éthylène ou encore avec du gaz naturel liquéfié constitué majoritairement de méthane.

Ainsi, la pompe disposée dans la cuve élève la pression du gaz à l'état liquide à une pression permettant l'alimentation de l'appareil consommateur de gaz à basse pression si la ligne d'alimentation auxiliaire est ouverte.

La pompe additionnelle, quant à elle, élève la pression du gaz à l'état liquide circulant dans le premier circuit d'alimentation à haute pression, afin que le gaz soit porté à une pression compatible avec l'alimentation de l'appareil consommateur de gaz à haute pression.

Selon une caractéristique de l'invention, le compresseur est configuré pour élever une pression du gaz à une valeur comprise entre 6 et 20 bars absolus. Cette valeur de pression assure une compatibilité du gaz à l'état vapeur présent dans le ciel de cuve et aspiré au sein du deuxième circuit d'alimentation avec l'appareil consommateur de gaz à basse pression.

Selon une caractéristique de l'invention, l'évaporateur haute pression est disposé en aval du deuxième échangeur de chaleur sur le premier circuit d'alimentation en gaz de l'appareil consommateur de gaz à haute pression.

Selon une caractéristique de l'invention, le deuxième échangeur de chaleur et l'évaporateur haute pression forment un unique échangeur de chaleur. Le premier échangeur de chaleur est alors distinct et disposé en amont d'un unique échangeur de chaleur qui rassemble le deuxième échangeur de chaleur et l'évaporateur haute pression. Une telle alternative peut être avantageuse, par exemple, afin de réduire l'encombrement du système d'alimentation. L'unique échangeur formé comprend alors une première passe à travers laquelle circule le gaz à l'état liquide du premier circuit d'alimentation, une deuxième passe à travers laquelle circule le gaz à l'état vapeur de la ligne de retour et une troisième passe à travers laquelle circule le fluide caloporteur de l'évaporateur haute pression. La mise en place d'un tel unique échangeur de chaleur est compatible avec l'ensemble des modes de réalisation décrit précédemment.

Selon une caractéristique de l'invention, un ratio de gaz condensé par les échangeurs de chaleur et circulant au sein de la ligne de retour par rapport à une quantité de gaz à l'état liquide circulant dans le premier circuit d'alimentation en gaz est de 16% à +/- 5%. Le premier circuit d'alimentation est configuré de sorte à ce qu'un débit de gaz circulant au sein de celui-ci est d'environ six tonnes par heure. Pour six tonnes par heure de gaz à l'état liquide circulant à travers les échangeurs de chaleur, c'est environ une tonne par heure de gaz à l'état vapeur circulant dans la ligne de retour qui est condensé.

L'invention couvre également un ouvrage flottant de stockage et/ou de transport de gaz à l'état liquide, comprenant au moins une cuve de gaz à l'état liquide, au moins un appareil consommateur de gaz à haute pression, au moins un appareil consommateur de gaz à basse pression et au moins un système d'alimentation en gaz de ces appareils.

L'invention couvre aussi un système pour charger ou décharger un gaz liquide qui combine au moins une installation à terre et/ou portuaire et au moins un ouvrage flottant de stockage et/ou de transport de gaz liquide.

L'invention couvre enfin un procédé de chargement ou de déchargement d'un gaz liquide d'un ouvrage flottant de stockage et/ou de transport de gaz dans lequel des canalisations de chargement et/ou de déchargement de gaz à l'état liquide disposées sur un pont supérieur de l'ouvrage flottant peuvent être raccordées, au moyen de connecteurs appropriés, à un terminal maritime ou portuaire afin de transférer le gaz à l'état liquide depuis ou vers la cuve.

Pour résoudre le problème technique, on peut également prévoir un système d'alimentation en gaz d'au moins un appareil consommateur de gaz à haute pression et d'au moins un appareil consommateur de gaz à basse pression d'un ouvrage flottant comprenant au moins une cuve configurée pour contenir le gaz, le système d'alimentation comprenant :
- au moins un premier circuit d'alimentation en gaz de l'appareil consommateur de gaz à haute pression, comprenant au moins une pompe configurée pour pomper le gaz prélevé à l'état liquide dans la cuve,
- au moins un évaporateur haute pression configuré pour évaporer le gaz circulant dans le premier circuit d'alimentation en gaz,
- au moins un deuxième circuit d'alimentation en gaz de l'appareil consommateur de gaz à basse pression, comprenant au moins un compresseur configuré pour comprimer du gaz prélevé à l'état vapeur dans la cuve jusqu'à une pression compatible avec les besoins de l'appareil consommateur de gaz à basse pression,
caractérisé en ce que le système d'alimentation comprend une ligne de retour de gaz connectée au deuxième circuit d'alimentation en aval du compresseur et s'étendant jusqu'à la cuve, le système d'alimentation comprenant au moins un échangeur de chaleur unitaire qui rassemble l'évaporateur haute pression avec un premier échangeur de chaleur et avec un deuxième échangeur de chaleur chacun configurés pour opérer un échange de chaleur entre le gaz circulant dans la ligne de retour à l'état vapeur et le gaz à l'état liquide circulant dans le premier circuit d'alimentation. L'échangeur de chaleur unitaire est ainsi un seul et même composant et permet d'avoir une installation compacte.

Selon un aspect de cette solution, l'échangeur de chaleur unitaire comprend au moins trois passes, dont une première passe est parcourue par le gaz prélevé à l'état liquide dans la cuve et circulant dans le premier circuit d'alimentation, une deuxième passe parcourue par le gaz circulant dans la ligne de retour et une troisième passe parcourue par le fluide caloporteur chargé de chauffer le gaz prélevé à l'état liquide dans la cuve.

Selon un aspect de cette solution, la première passe est séparée en trois portions distinctes, notamment une première portion affectée à un échange de chaleur avec la deuxième passe, une deuxième portion affectée à un échange de chaleur avec la deuxième passe et une troisième portion affectée à un échange de chaleur avec la troisième passe.

Selon un aspect de l'invention, la première portion de la première passe est séparée de la deuxième portion de cette première passe par le compresseur.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[fig 1] est une représentation schématique d'un système d'alimentation selon un premier mode de réalisation de l'invention,
[fig 2] est une représentation schématique d'un système d'alimentation selon un deuxième mode de réalisation de l'invention,
[fig 3] est une représentation schématique d'un système d'alimentation selon une alternative au deuxième mode de réalisation de l'invention,
[fig 4] est une représentation schématique d'un système d'alimentation selon un troisième mode de réalisation de l'invention,
[fig 5] est une représentation schématique d'un système d'alimentation résolvant le problème technique qui sous-tend l'invention,
[fig 6] est une représentation schématique écorchée d'une cuve d'un ouvrage flottant et d'un terminal de chargement et/ou de déchargement de cette cuve.

Les termes « amont » et « aval » employés dans la description qui suit sont utilisés pour exprimer des positions d'éléments au sein de circuits de gaz à l'état liquide ou à l'état vapeur et se réfèrent au sens de circulation dudit gaz au sein dudit circuit.

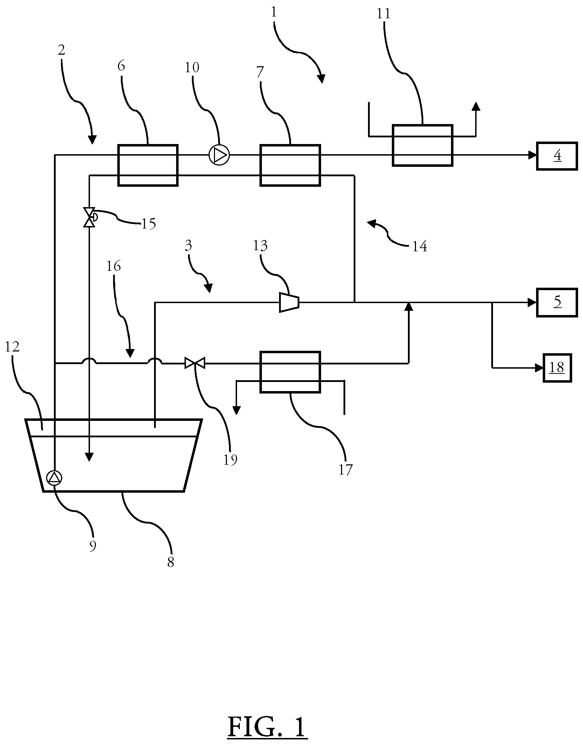

Les figures 1 à 5 représentent un système d'alimentation 1 en gaz disposé sur un ouvrage flottant. Le système d'alimentation 1 permet de faire circuler du gaz pouvant être à l'état liquide, à l'état vapeur, à l'état diphasique ou à l'état supercritique, et ce à partir d'une cuve 8 de stockage et/ou de transport, et jusqu'à un appareil consommateur de gaz à haute pression 4 et/ou un appareil consommateur de gaz à basse pression 5, afin d'alimenter ces derniers en carburant.

Ledit ouvrage flottant peut par exemple être un navire pouvant stocker et/ou transporter du gaz à l'état liquide. Le système d'alimentation 1 est dans ce cas apte à utiliser le gaz à l'état liquide que l'ouvrage flottant stocke et/ou transporte pour alimenter l'appareil consommateur de gaz à haute pression 4, lequel pouvant par exemple être un moteur de propulsion, et l'appareil consommateur de gaz à basse pression 5, lequel pouvant par exemple être un générateur électrique alimentant l'ouvrage flottant en électricité.

Afin d'assurer la circulation du gaz contenu dans la cuve 8 jusqu'à l'appareil consommateur de gaz à haute pression 4, le système d'alimentation 1 est pourvu d'un premier circuit d'alimentation 2 en gaz. Le premier circuit d'alimentation 2 comprend une pompe 9 disposée au sein de la cuve 8. La pompe 9 permet de pomper le gaz à l'état liquide et de le faire circuler notamment au sein du premier circuit d'alimentation 2. En aspirant le gaz à l'état liquide, la pompe 9 permet également d'élever la pression de celui-ci à une valeur comprise entre 6 et 17 bars.

Le gaz à l'état liquide, selon un sens de circulation allant de la cuve 8 vers l'appareil consommateur de gaz à haute pression 4, traverse un premier échangeur de chaleur 6, est pompé par une pompe additionnelle 10 et traverse un deuxième échangeur de chaleur 7. Les détails concernant les deux échangeurs de chaleur 6, 7 seront décrits par la suite.

Suite à la traversée du deuxième échangeur de chaleur 7, le gaz circule jusqu'à un évaporateur haute pression 11. L'évaporateur haute pression 11 permet de modifier l'état du gaz circulant dans le premier circuit d'alimentation 2 afin de le faire passer à l'état vapeur ou supercritique. Un tel état permet au gaz d'être compatible pour alimenter l'appareil consommateur de gaz à haute pression 4. L'évaporation du gaz à l'état liquide peut par exemple se faire par échange de chaleur avec un fluide caloporteur à température suffisamment élevée pour évaporer le gaz à l'état liquide, ici de l'eau glycolée, de l'eau de mer ou de la vapeur d'eau.

Selon un premier mode de réalisation illustré à la figure 1, le premier échangeur de chaleur 6, le deuxième échangeur de chaleur 7 et l'évaporateur haute pression 11 sont des échangeurs de chaleur séparés les uns des autres. Une telle configuration permet de concevoir et de fabriquer chacun des échangeurs de chaleur dans une technologie adaptée à la pression des fluides les parcourant. Dans le cas d'espèce, le premier échangeur de chaleur 6 peut être réalisé selon une technologie moins couteuse que celle servant à la fabrication du deuxième échangeur de chaleur 7, car la pression au sein du premier échangeur est significativement inférieure à celle présente au sein du deuxième échangeur de chaleur 7. Il en va de même pour l'évaporateur haute pression 11.

La hausse de la pression du gaz est assurée par la pompe additionnelle 10 lorsque celle-ci pompe le gaz à l'état liquide. La pompe additionnelle 10 permet d'élever la pression du gaz à l'état liquide à une valeur comprise entre 30 et 70 bars pour un usage avec du gaz de pétrole liquéfié, et de préférence entre 150 et 400 bars pour un usage avec de l'éthane, de l'éthylène ou encore avec du gaz naturel liquéfié constitué majoritairement de méthane.

Grâce à la combinaison de la pompe additionnelle 10 et de l'évaporateur haute pression 11, le gaz est à une pression et dans un état compatible pour l'alimentation de l'appareil consommateur à haute pression 4. Une telle configuration permet d'éviter l'installation de compresseurs haute pression sur le premier circuit d'alimentation 2 qui présentent des contraintes de coûts et génèrent de fortes vibrations.

Au sein de la cuve 8, une partie de la cargaison de gaz peut naturellement passer à l'état vapeur et se diffuser dans un ciel de cuve 12. Afin d'éviter une surpression au sein de la cuve 8, le gaz à l'état vapeur contenu dans le ciel de cuve 12 doit être évacué. Or, le premier circuit d'alimentation 2 est configuré pour utiliser le gaz à l'état liquide pour alimenter l'appareil consommateur de gaz à haute pression 4.

Le système d'alimentation 1 comprend donc un deuxième circuit d'alimentation 3 en gaz, qui utilise le gaz à l'état vapeur pour alimenter l'appareil consommateur de gaz à basse pression 5. Le deuxième circuit d'alimentation 3 s'étend donc entre le ciel de cuve 12 et l'appareil consommateur de gaz à basse pression 5. Afin d'aspirer le gaz à l'état vapeur contenu dans le ciel de cuve 12, le deuxième circuit d'alimentation 3 comprend un compresseur 13. En plus d'aspirer le gaz à l'état vapeur, le compresseur 13 permet également d'élever une pression du gaz à l'état vapeur circulant dans le deuxième circuit d'alimentation 3 à une pression comprise entre 6 et 20 bars absolus, et ce afin que le gaz à l'état vapeur soit à une pression compatible pour l'alimentation de l'appareil consommateur de gaz à basse pression 5. Le deuxième circuit d'alimentation 3 permet ainsi d'alimenter l'appareil consommateur de gaz à basse pression 5, et ce tout en régulant la pression au sein de la cuve 8 en aspirant le gaz à l'état vapeur présent dans le ciel de cuve 12.

La présence du gaz à l'état vapeur en quantité excessive au sein du ciel de cuve 12 entraîne une surpression au sein de la cuve 8. Il est donc nécessaire d'évacuer le gaz à l'état vapeur dans le but d'abaisser la pression au sein de la cuve 8. Le gaz à l'état vapeur en excès peut alors par exemple être éliminé par un brûleur 18. Toutefois, le système d'alimentation 1 selon l'invention comprend une ligne de retour 14 qui s'étend du deuxième circuit d'alimentation 3 jusqu'à la cuve 8.

La ligne de retour 14 est raccordée sur le deuxième circuit d'alimentation 3 en aval du compresseur 13 par rapport à un sens de circulation du gaz à l'état vapeur circulant dans le deuxième circuit d'alimentation 3. Selon le sens de circulation du gaz à l'état vapeur circulant dans la ligne de retour 14, ledit gaz traverse le deuxième échangeur de chaleur 7 dans un premier temps, puis traverse le premier échangeur de chaleur 6. L'échange de calories s'effectuant au sein du premier échangeur de chaleur 6 et du deuxième échangeur de chaleur 7 est donc entre le gaz à l'état liquide circulant dans le premier circuit d'alimentation 2 et le gaz à l'état vapeur circulant dans la ligne de retour 14. L'objectif de cet échange de calories est de condenser le gaz à l'état vapeur de la ligne de retour 14, afin que celui-ci passe à l'état liquide et retourne dans la cuve 8 dans cet état, au lieu d'être éliminé par le bruleur 18.

C'est à l'entrée du premier échangeur de chaleur 6 que le gaz à l'état liquide du premier circuit d'alimentation 2 présente la température la plus basse. De ce fait, c'est donc après avoir traversé le premier échangeur de chaleur 6 que le gaz circulant dans la ligne de retour 14 est condensé. Le gaz de la ligne de retour 14 est donc à l'état vapeur à l'entrée du premier échangeur de chaleur 6 et sort à l'état liquide suite à l'échange de calories se déroulant au sein du premier échangeur de chaleur 6.

Afin d'aligner la pression du gaz circulant dans la ligne de retour à la pression qui règne dans la cuve 8, la ligne de retour 14 peut comprendre un organe de détente 15 qui abaisse la pression du gaz à une pression comprise entre 1 et 3 bars absolus. Une fois que le gaz est condensé, celui-ci poursuit sa course jusqu'à la cuve 8. Le premier échangeur de chaleur 6 fait donc office de condenseur.

Le ratio de quantité de gaz à l'état vapeur condensé par rapport à la quantité de gaz à l'état liquide circulant au sein du premier circuit d'alimentation 2 est d'environ 16% +/-5%. Autrement dit, pour environ six tonnes par heure de gaz à l'état liquide circulant dans le premier circuit d'alimentation 2, environ une tonne par heure de gaz à l'état vapeur circulant dans la ligne de retour est condensé.

Le deuxième échangeur de chaleur 7 est situé en aval du premier échangeur de chaleur 6 selon le sens de circulation du gaz dans le premier circuit d'alimentation 2, et en amont du premier échangeur de chaleur 6 selon le sens de circulation du gaz dans la ligne de retour 14. Le deuxième échangeur de chaleur 7 assure donc un pré-refroidissement du gaz à l'état vapeur circulant dans la ligne de retour 14 avant que celui-ci soit condensé au sein du premier échangeur de chaleur 6. Au niveau du premier circuit d'alimentation 2, le gaz à l'état liquide à l'entrée du deuxième échangeur de chaleur 7 a auparavant traversé le premier échangeur de chaleur 6 et a été pompé par la pompe additionnelle 10, ce qui a donc augmenté sa température et sa pression. Il est ainsi possible que suite à l'échange de calories se produisant au niveau du deuxième échangeur de chaleur 7, le gaz circulant au sein du premier circuit d'alimentation 2 sorte du deuxième échangeur de chaleur 7 dans un état diphasique. La température du gaz circulant dans la ligne de retour 14 est donc abaissée après la traversée du deuxième échangeur de chaleur 7, mettant en œuvre le pré-refroidissement indiqué plus haut.

La pompe additionnelle 10 est avantageusement disposée entre les deux échangeurs de chaleur 6, 7. La présence de la pompe additionnelle 10 entre le premier échangeur de chaleur 6 et le deuxième échangeur de chaleur 7 assure le fait que seul du gaz à l'état liquide circule à travers la pompe additionnelle 10, et non du gaz dans un état diphasique risquant d'endommager cette dernière.

Par ailleurs, la présence de la pompe additionnelle 10 en aval du premier échangeur de chaleur 6 assure la hausse de pression du gaz à l'état liquide, et cela sans perturber l'échange de calories se produisant au sein du premier échangeur de chaleur 6. La condensation du gaz à l'état vapeur circulant dans la ligne de retour 14 est ainsi effectuée de manière optimale.

Le système d'alimentation 1 comprend également une ligne d'alimentation auxiliaire 16, s'étendant du premier circuit d'alimentation 2, par un piquage entre la pompe 9 et le premier échangeur de chaleur 6, jusqu'au deuxième circuit d'alimentation 3, en se raccordant à celui-ci entre le compresseur 13 et l'appareil consommateur de gaz à basse pression 5. La ligne d'alimentation auxiliaire 16 permet d'alimenter l'appareil consommateur de gaz à basse pression 5 en cas de débit insuffisant de gaz à l'état vapeur formé au sein du ciel de cuve 12.

Lorsque le gaz à l'état vapeur n'est pas présent en quantité suffisante dans le ciel de cuve 12, le gaz à l'état liquide pompé par la pompe 9 peut alors circuler au sein de cette ligne d'alimentation auxiliaire 16 afin d'alimenter l'appareil consommateur de gaz à basse pression 5. Pour ce faire, la ligne d'alimentation auxiliaire 16 traverse un évaporateur basse pression 17 afin que le gaz à l'état liquide circulant dans la ligne d'alimentation auxiliaire 16 passe à l'état de vapeur. Le fonctionnement de l'évaporateur basse pression 17 peut par exemple être identique à celui de l'évaporateur haute pression 11, c'est-à-dire que le gaz est évaporé par échange de chaleur avec un fluide caloporteur à température suffisamment élevée pour évaporer le gaz à l'état liquide. En sortie de l'évaporateur basse pression 17, le gaz à l'état vapeur circule au sein de la ligne d'alimentation auxiliaire 16, puis rejoint le deuxième circuit d'alimentation 3 afin d'alimenter l'appareil consommateur de gaz à basse pression 5.

On comprend de ce qu'il précède que la ligne d'alimentation auxiliaire 16 n'est utilisée qu'en l'absence de gaz à l'état vapeur en quantité suffisante au sein du ciel de cuve 12. Ainsi, la ligne d'alimentation auxiliaire 16 comprend une vanne 19 assurant le contrôle de la circulation de gaz au sein de la ligne d'alimentation auxiliaire 16 lorsque l'utilisation de celle-ci n'est pas nécessaire.

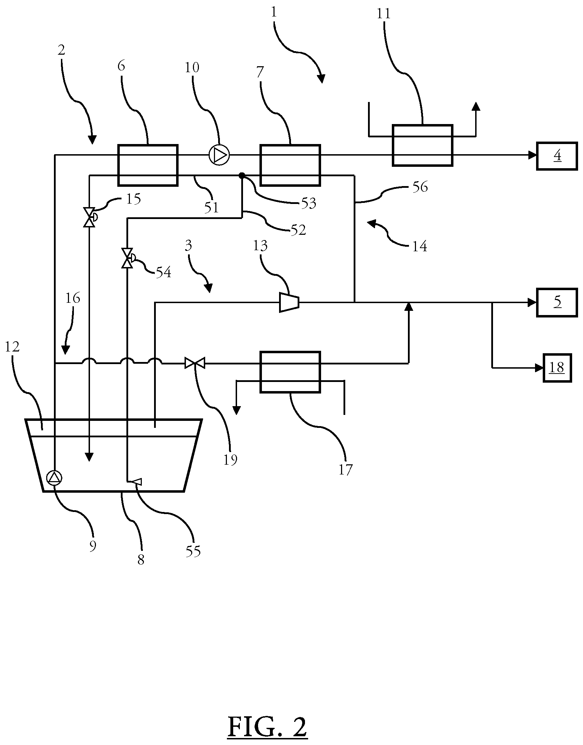

La figure 2 représente un deuxième mode de réalisation du système d'alimentation 1 selon l'invention. Ce deuxième mode de réalisation se distingue du premier mode de réalisation par le fait que la ligne de retour 14 comprend une section principale 56 qui débute au niveau du raccordement avec le deuxième circuit d'alimentation 3 et qui s'étend jusqu'à un point de divergence 53. Au niveau du point de divergence 53, la ligne de retour 14 se divise en une première section 51 et en une deuxième section 52 s'étendant toutes deux du point de divergence 53 jusqu'à la cuve 8.

Selon ce deuxième mode de réalisation, le point de divergence 53 est agencé en aval du deuxième échangeur de chaleur 7. C'est donc la section principale 56 de la ligne de retour 14 qui traverse le deuxième échangeur de chaleur 7.

En sortie du deuxième échangeur de chaleur 7, le gaz à l'état vapeur circule jusqu'au point de divergence 53 et peut par la suite circuler au sein de la première section 51 ou de la deuxième section 52. La première section 51 traverse le premier échangeur de chaleur 6 tandis que la deuxième section 52 s'étend jusqu'à la cuve 8 en contournant le premier échangeur de chaleur 6. Autrement dit le gaz à l'état vapeur peut circuler au sein de la première section 51 et être condensé grâce à l'échange de calories se produisant au niveau du premier échangeur de chaleur 6, ou peut circuler au sein de la deuxième section 52 et retourner dans la cuve 8 à l'état gazeux.

Le choix de la section au sein de laquelle circule le gaz à l'état vapeur est notamment dépendant d'un débit de gaz à l'état liquide circulant dans le premier circuit d'alimentation 2, ledit débit devant être suffisant pour condenser intégralement le gaz à l'état vapeur circulant dans la ligne de retour 14. Ainsi, lorsque la quantité de gaz à l'état liquide circulant dans le premier circuit d'alimentation est supérieure ou égale à six fois la quantité de gaz à l'état vapeur circulant dans la ligne de retour, le gaz à l'état vapeur peut être dirigée vers la première section 51 afin que la condensation de celui-ci puisse être mise en œuvre.

Si la quantité de gaz à l'état liquide circulant dans le premier circuit d'alimentation est inférieure à six fois la quantité de gaz à l'état vapeur circulant dans la ligne de retour, alors une première fraction du gaz à l'état vapeur circule au sein de la première section 51 en quantité telle que la première fraction est intégralement condensée au sein du premier échangeur 6, tandis qu'une deuxième fraction du gaz à l'état vapeur, correspondant à la quantité de gaz à l'état vapeur ne circulant pas dans la première section 51, circule au sein de la deuxième section 52 afin de retourner directement au sein de la cuve 8. Dans le cas où il n'y a pas ou trop peu de circulation de gaz à l'état liquide circulant dans le premier circuit d'alimentation 2, l'intégralité du gaz à l'état vapeur circule alors dans la deuxième section 52 pour retourner directement dans la cuve 8, afin d'éviter une perte de charge résultant de la traversée du premier échangeur de chaleur 6. Dans cette condition, le retour du gaz dans la cuve 8 se fait à l'état vapeur. Une telle situation survient lorsque le gaz à l'état liquide est peu utilisé pour alimenter l'appareil consommateur de gaz à haute pression 4.

Afin de réguler la circulation au sein de la ligne de retour 14, l'organe de détente 15 est agencé au niveau de la première section 51, en aval du premier échangeur de chaleur 6, tandis que la deuxième section 52 comprend un organe de régulation de débit 54. L'organe de détente 15 et l'organe de régulation de débit 54 peuvent également assurer une fonction de détente du gaz circulant dans l'une ou l'autre des sections.

D'une manière avantageuse, que ce soit pour la première section 51 ou la deuxième section 52, le gaz qui y circule retourne au fond de la cuve 8 ou au moins dans une zone où le gaz est sous forme liquide. Plus particulièrement, le gaz circulant à l'état vapeur dans la deuxième section 52 retourne au fond de la cuve à l'état vapeur. La température et la densité du gaz à l'état liquide présent dans la cuve 8 permet ainsi de condenser le gaz à l'état vapeur sortant de la deuxième section 52. Afin de faciliter cette condensation du gaz à l'état vapeur, la deuxième section 52 peut comprendre un organe d'éjection 55 agencé au niveau d'une extrémité de la deuxième section 52 immergée dans le contenu liquide de la cuve 8. L'organe d'éjection 55 permet de détendre le gaz à l'état vapeur circulant dans la deuxième section 52 afin de faciliter la condensation de celui-ci au sein de la cuve 8. L'organe d'éjection 55 peut par exemple être un éjecteur ou un dispositif de bullage. Le renvoi du gaz à l'état vapeur dans la cuve 8 via la deuxième section 52 entraîne une hausse de la température du gaz à l'état liquide présent dans la cuve 8.

Les caractéristiques non décrites du deuxième mode de réalisation étant identiques à celles du premier mode de réalisation, on se réfèrera donc à la description de la figure 1 pour la description des éléments communs aux deux modes de réalisation.

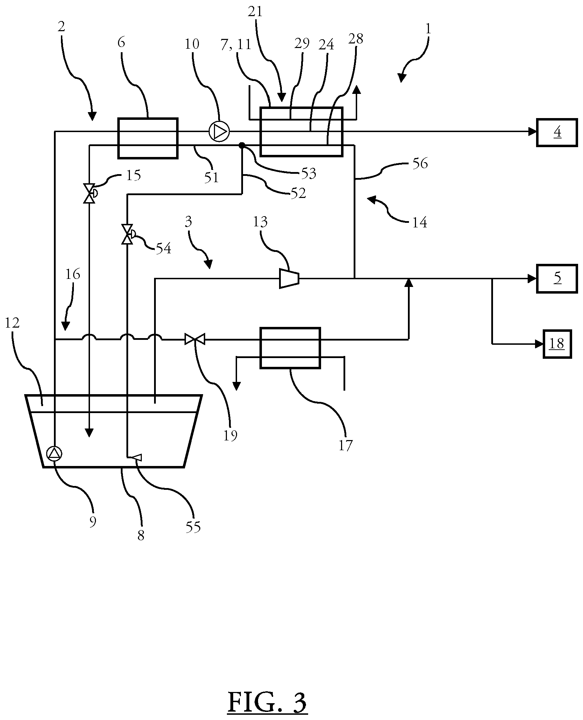

La figure 3 montre une alternative au deuxième mode de réalisation au système d'alimentation 1 en tous points identiques à ce qui est décrit en figure 2, à l'exception des éléments suivants.

Selon une telle alternative, le deuxième échangeur de chaleur 7 et l'évaporateur haute pression 11 forme un unique échangeur de chaleur 21. La solution illustrée à la figure 3 permet de concevoir et de fabriquer l'unique échangeur de chaleur 21 rassemblant le deuxième échangeur de chaleur 7 et l'évaporateur haute pression 11, ces deux composants étant soumis à une même haute pression qui dicte la technologie employée pour la fabrication de cet échangeur de chaleur commun. Une telle solution peut également se justifier par un manque d'espace ne permettant pas de mettre en place le deuxième échangeur de chaleur 7 et l'évaporateur haute pression 11 distinct l'un de l'autre.

Selon cette alternative au deuxième mode de réalisation, le point de divergence 53 est agencé en aval de l'unique échangeur de chaleur 21. C'est donc la section principale 56 de la ligne de retour 14 qui traverse l'unique échangeur de chaleur 21. A ce titre, l'unique échangeur de chaleur 21 comprend donc une première passe 24 au sein de laquelle circule le gaz à l'état liquide du premier circuit d'alimentation 2, une deuxième passe 28 au sein de laquelle circule le gaz à l'état vapeur de la ligne de retour 14 et une troisième passe 29 au sein de laquelle circule le fluide caloporteur évaporant le gaz à l'état liquide circulant dans la première passe 24.

Au niveau du premier circuit d'alimentation 2, le gaz à l'état liquide à l'entrée de l'unique échangeur de chaleur 21 a auparavant traversé le premier échangeur de chaleur 6 et a été pompé par la pompe additionnelle 10, ce qui a donc augmenté sa température et sa pression. Il est ainsi possible que suite à l'échange de calories se produisant au niveau de l'unique échangeur de chaleur 21, le gaz circulant dans la première passe 24 sorte de l'unique échangeur de chaleur 21 dans un état liquide, vapeur, diphasique ou supercritique.

Les caractéristiques non décrites de l'alternative au deuxième mode de réalisation étant identiques à celles des premiers et deuxièmes modes de réalisation, on se réfèrera donc à la description des figures 1 et 2 pour la description des éléments communs auxdits modes de réalisation.

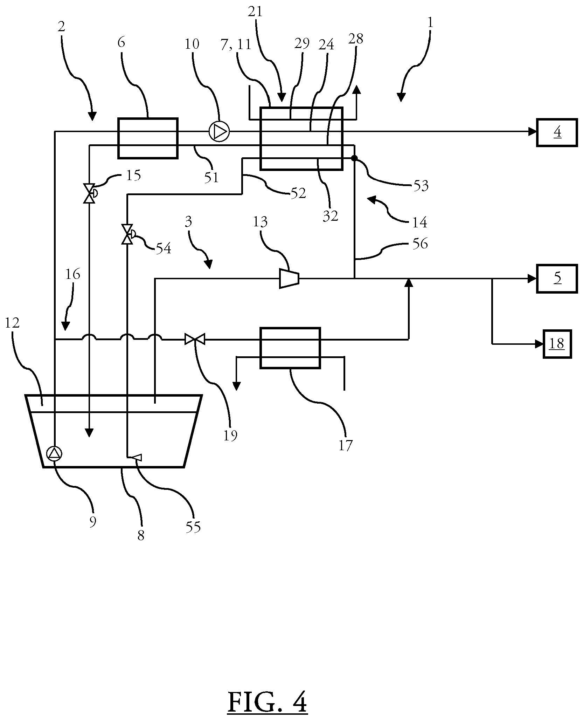

La figure 4 représente un troisième mode de réalisation du système d'alimentation 1. Comme pour l'alternative au deuxième mode de réalisation, le deuxième échangeur de chaleur 7 et l'évaporateur haute pression 11 sont réunis pour former l'unique échangeur de chaleur 21, mais ce troisième mode de réalisation est également applicable en cas de distinction entre le deuxième échangeur de chaleur 7 et l'évaporateur haute pression 11, tel que cela est illustré sur la figure 2. Le troisième mode de réalisation se distingue de l'alternative au deuxième mode de réalisation par le fait que le point de divergence 53 est disposé en amont de l'unique échangeur de chaleur 21. Ainsi, ce n'est pas la section principale 56 qui traverse l'unique échangeur de chaleur 21, mais la première section 51 et la deuxième section 52 qui traversent toutes deux l'unique échangeur de chaleur 21.

L'unique échangeur de chaleur 21 comprend donc ici la première passe 24 au sein de laquelle circule le gaz à l'état liquide du premier circuit d'alimentation 2, la deuxième passe 28 au sein de laquelle circule éventuellement le gaz à l'état vapeur de la première section 51 de la ligne de retour 14, la troisième passe 29 au sein de laquelle circule le fluide caloporteur évaporant le gaz à l'état liquide circulant dans la première passe 24, et une quatrième passe 32 au sein de laquelle circule éventuellement le gaz à l'état vapeur de la deuxième section 52 de la ligne de retour 14. Le troisième mode de réalisation du système d'alimentation 1 se distingue ainsi de l'alternative au deuxième mode de réalisation par le fait que l'unique échangeur de chaleur 21 comprend quatre passes au lieu de trois.

En sortie de l'unique échangeur de chaleur 21, la première section 51 s'étend jusqu'à la cuve 8 en traversant le premier échangeur de chaleur 6 tandis que la deuxième section 52 s'étend jusqu'à la cuve 8 en contournant le premier échangeur de chaleur 6.

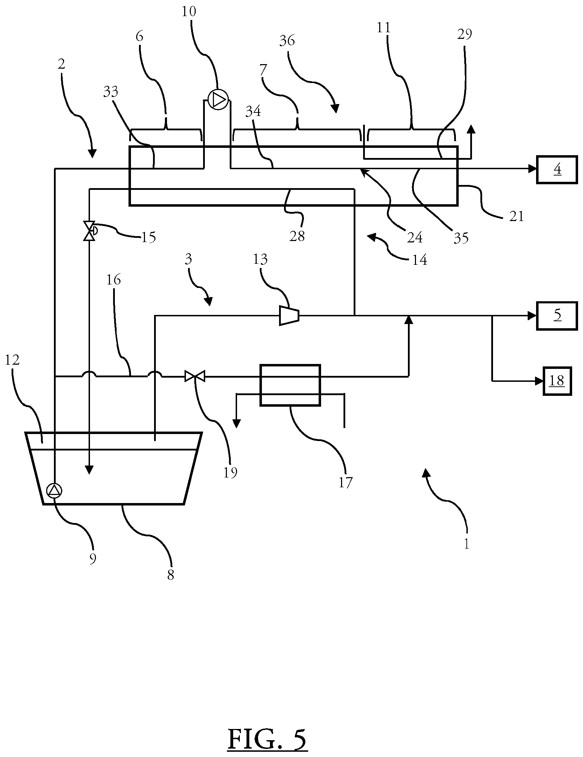

La figure 5 montre un système d'alimentation 1 en tous points identiques à la description donnée ci-dessus en référence à la figure 1, à l'exception des éléments suivants.

Le premier échangeur de chaleur 6, le deuxième échangeur de chaleur 7 et l'évaporateur haute pression 11 forme un échangeur de chaleur unitaire 32. Un tel composant comprend ainsi au moins trois passes, dont la première passe 24 parcourue par le gaz prélevé à l'état liquide dans la cuve 8 et circulant dans le premier circuit d'alimentation 2, la deuxième passe 28 parcourue par le gaz circulant dans la ligne de retour 14 et la troisième passe 29 parcourue par le fluide caloporteur chargé de chauffer le gaz prélevé à l'état liquide dans la cuve 8 pour l'évaporer et le délivrer à l'appareil consommateur de gaz à haute pression 4.

Il convient de noter que cet échangeur de chaleur unitaire 36 qui rassemble le premier échangeur de chaleur 6, le deuxième échangeur de chaleur 7 et l'évaporateur haute pression 11 comprend une première passe 24 séparée en trois portions distinctes : une première portion 33 affectée à un échange de chaleur avec la deuxième passe 28, une deuxième portion 34 affectée à un échange de chaleur avec la deuxième passe 28 et une troisième portion 35 affectée à un échange de chaleur avec la troisième passe 29. La première portion 33 est séparée de la deuxième portion 34 par la présence de la pompe additionnelle 10, qui est disposé hors de l'échangeur de chaleur unitaire 36. La pompe additionnelle 10 comprend un orifice d'admission raccordée à une sortie de la première portion 33, ainsi qu'un orifice d'évacuation raccordée à une entrée de la deuxième portion 34.

La solution illustrée à la figure 5 permet de concevoir et de fabriquer un échangeur de chaleur unitaire 36 rassemblant le premier échangeur de chaleur 6, le deuxième échangeur de chaleur 7 et l'évaporateur haute pression 11, la technologie de cet échangeur de chaleur unitaire 36 étant alors imposé par la première passe 24 soumise à la haute pression.

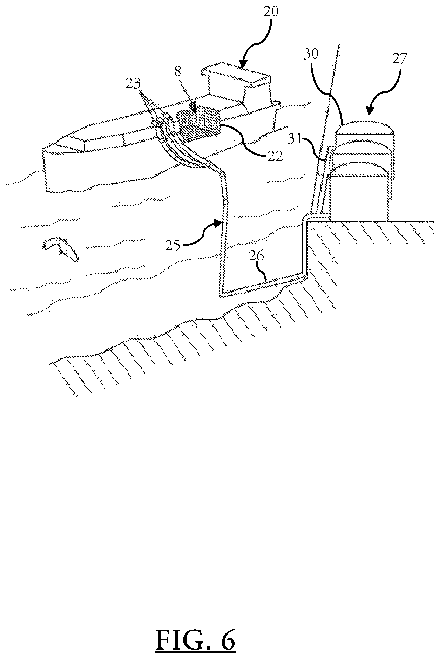

La figure 6 est une vue écorchée d'un ouvrage flottant 20 qui montre la cuve 8 qui contient le gaz à l'état liquide et à l'état vapeur, cette cuve 8 étant de forme générale prismatique montée dans une double coque 22 de l'ouvrage flottant 20. La paroi de la cuve 8 comporte une membrane d'étanchéité primaire destinée à être en contact avec le gaz à l'état liquide contenu dans la cuve 8, une membrane d'étanchéité secondaire agencée entre la membrane d'étanchéité primaire et la double coque 22 de l'ouvrage flottant 20, et deux barrières thermiquement isolantes agencées respectivement entre la membrane d'étanchéité primaire et la membrane d'étanchéité secondaire et entre la membrane d'étanchéité secondaire et la double coque 22.

Des canalisations 23 de chargement et/ou de déchargement de gaz à l'état liquide disposées sur le pont supérieur de l'ouvrage flottant 20 peuvent être raccordées, au moyen de connecteurs appropriées, à un terminal maritime ou portuaire pour transférer la cargaison de gaz à l'état liquide depuis ou vers la cuve 8.

La figure 6 représente également un exemple de terminal maritime ou portuaire comportant un équipement de chargement et/ou de déchargement 25, une conduite sous-marine 26 et une installation à terre et/ou portuaire 27. L'installation à terre et/ou portuaire 27 peut par exemple être agencée sur le quai d'un port, ou selon un autre exemple être agencée sur une plate-forme gravitaire en béton. L'installation à terre et/ou portuaire 27 comporte des cuves de stockage de gaz à l'état liquide 30 et des conduites de liaison 31 reliées par la conduite sous-marine 26 à l'équipement de chargement et/ou de déchargement 25.

Pour engendrer la pression nécessaire au transfert du gaz à l'état liquide, on met en œuvre des pompes équipant l'installation à terre et/ou portuaire 27 et/ou des pompes équipant l'ouvrage flottant 20.

Bien sûr, l'invention n'est pas limitée aux exemples qui viennent d'être décrits et de nombreux aménagements peuvent être apportés à ces exemples sans sortir du cadre des revendications.

## Revendications

1. Système d'alimentation (1) en gaz d'au moins un appareil consommateur de gaz à haute pression (4) et d'au moins un appareil consommateur de gaz à basse pression (5) d'un ouvrage flottant (20) comprenant au moins une cuve (8) configurée pour contenir le gaz, le système d'alimentation (1) comprenant :
- au moins un premier circuit d'alimentation (2) en gaz de l'appareil consommateur de gaz à haute pression (4), comprenant au moins une pompe (9) configurée pour pomper le gaz prélevé à l'état liquide dans la cuve (8),
- au moins un évaporateur haute pression (11) configuré pour évaporer le gaz circulant dans le premier circuit d'alimentation (2) en gaz,
- au moins un deuxième circuit d'alimentation (3) en gaz de l'appareil consommateur de gaz à basse pression (5), comprenant au moins un compresseur (13) configuré pour comprimer du gaz prélevé à l'état vapeur dans la cuve (8) jusqu'à une pression compatible avec les besoins de l'appareil consommateur de gaz à basse pression (5),
- une ligne de retour (14) de gaz connectée au deuxième circuit d'alimentation (3) en aval du compresseur (13) et s'étendant jusqu'à la cuve (8),
- au moins un premier échangeur de chaleur (6) configuré pour opérer un échange de chaleur entre le gaz circulant dans la ligne de retour (14) à l'état vapeur et le gaz à l'état liquide circulant dans le premier circuit d'alimentation (2),
- le premier circuit d'alimentation (2) comprenant une pompe additionnelle (10),
**caractérisé en ce que** le système d'alimentation (1) comprend au moins un deuxième échangeur de chaleur (7) configuré pour opérer un échange de chaleur entre le gaz circulant dans la ligne de retour (14) à l'état vapeur et le gaz à l'état liquide circulant dans le premier circuit d'alimentation (2), la pompe additionnelle (10) étant interposée entre le premier échangeur de chaleur (6) et le deuxième échangeur de chaleur (7).

2. Système d'alimentation (1) selon la revendication 1, dans lequel la ligne de retour (14) comprend un point de divergence (53) divisant la ligne de retour (14) en une première section (51) et en une deuxième section (52) s'étendant toutes deux du point de divergence (53) jusqu'à la cuve (8), le premier échangeur de chaleur (6) étant configuré pour opérer un échange de chaleur entre le gaz circulant à l'état vapeur dans la première section (51) de la ligne de retour (14) et le gaz à l'état liquide circulant dans le premier circuit d'alimentation (2), la deuxième section (52) contournant le premier échangeur de chaleur (6).

3. Système d'alimentation (1) selon la revendication précédente, dans lequel le point de divergence (53) est disposé sur la ligne de retour (14) entre le premier échangeur de chaleur (6) et le deuxième échangeur de chaleur (7).

4. Système d'alimentation (1) selon la revendication 2, dans lequel le point de divergence (53) est disposé sur la ligne de retour (14), entre la connexion au deuxième circuit d'alimentation (3) et le deuxième échangeur de chaleur (7), la première section (51) et la deuxième section (52) traversant le deuxième échangeur de chaleur (7).

5. Système d'alimentation (1) selon l'une quelconque des revendications 2 à 4, dans lequel la deuxième section (52) de la ligne de retour (14) comprend une extrémité immergée dans le liquide contenu dans la cuve (8), la deuxième section (52) comprenant un organe d'éjection (55) disposé au niveau de l'extrémité immergée.

6. Système d'alimentation (1) selon l'une quelconque des revendications 2 à 5, dans lequel la deuxième section (52) de la ligne de retour (14) comprend un organe de régulation de débit (54).

7. Système d'alimentation (1) selon l'une quelconque des revendications précédentes, dans lequel le premier échangeur de chaleur (6) est configuré pour condenser le gaz circulant au sein de la ligne de retour (14).

8. Système d'alimentation (1) selon l'une quelconque des revendications précédentes, dans lequel le deuxième échangeur de chaleur (7) est configuré pour pré-refroidir le gaz circulant au sein de la ligne de retour (14).

9. Système d'alimentation (1) selon l'une quelconque des revendications précédentes, dans lequel la ligne de retour (14) comprend un organe de détente (15) disposé en aval du premier échangeur de chaleur (6).

10. Système d'alimentation (1) selon l'une quelconque des revendications précédentes, comprenant une ligne d'alimentation auxiliaire (16) connectée au premier circuit d'alimentation (2), en amont du premier échangeur de chaleur (6), et s'étendant jusqu'au deuxième circuit d'alimentation (3), en aval du compresseur (13), le système d'alimentation (1) comprenant un évaporateur basse pression (17) configuré pour évaporer le gaz circulant dans la ligne d'alimentation auxiliaire (16).

11. Système d'alimentation (1) selon l'une quelconque des revendications précédentes, dans lequel la pompe (9) est configurée pour élever une pression du gaz à l'état liquide à une valeur comprise entre 6 et 17 bars et la pompe additionnelle (10) est configurée pour élever la pression du gaz à l'état liquide à une valeur comprise entre 30 et 400 bars.

12. Système d'alimentation (1) selon l'une quelconque des revendications précédentes, dans lequel le compresseur (13) est configuré pour élever une pression du gaz à une valeur comprise entre 6 et 20 bars absolus.

13. Système d'alimentation selon l'une quelconque des revendications précédentes, dans lequel l'évaporateur haute pression (11) est disposé en aval du deuxième échangeur de chaleur (7) sur le premier circuit d'alimentation (2) en gaz de l'appareil consommateur de gaz à haute pression (4).

14. Système d'alimentation selon l'une quelconque des revendications précédentes, dans lequel le deuxième échangeur de chaleur (7) et l'évaporateur haute pression (11) forment un unique échangeur de chaleur (21).

15. Ouvrage flottant (20) de stockage et/ou de transport de gaz à l'état liquide, comprenant au moins une cuve (8) de gaz à l'état liquide, au moins un appareil consommateur de gaz à haute pression (4), au moins un appareil consommateur de gaz à basse pression (5) et au moins un système d'alimentation (1) en gaz de ces appareils selon l'une quelconque des revendications précédentes.

16. Système pour charger ou décharger un gaz liquide qui combine au moins une installation à terre et/ou portuaire (27) et au moins un ouvrage flottant (20) de stockage et/ou de transport de gaz liquide selon la revendication précédente.

17. Procédé de chargement ou de déchargement d'un gaz liquide d'un ouvrage flottant (20) de stockage et/ou de transport de gaz selon la revendication 15, dans lequel des canalisations (23) de chargement et/ou de déchargement de gaz à l'état liquide disposées sur un pont supérieur de l'ouvrage flottant (20) peuvent être raccordées, au moyen de connecteurs appropriés, à un terminal maritime ou portuaire afin de transférer le gaz à l'état liquide depuis ou vers la cuve (8).

## Patentansprüche

1. Ein System (1) zur Gasversorgung mindestens eines Hochdruckgasverbrauchsvorrichtung (4) und mindestens eines Niederdruck-Gasverbrauchsvorrichtung (5) einer schwimmenden Struktur (20), die mindestens einen zur Aufnahme des Gases ausgelegten Tank (8) umfasst, wobei das Versorgungssystem (1) Folgendes umfasst:
- mindestens einen ersten Gaszufuhrkreislauf (2) der Hochdruckgasverbrauchsvorrichtung (4), umfassend mindestens eine Pumpe (9), die so konfiguriert ist, dass sie das im flüssigen Zustand gesammelte Gas in den Tank (8) pumpt,
- mindestens ein Hochdruckverdampfer (11), der so konfiguriert ist, dass er das im ersten Gaszufuhrkreislauf (2) zirkulierende Gas verdampft,
- mindestens ein zweiten Versorgungskreislauf (3) zur Versorgung der Niederdruck-Gasverbrauchsvorrichtung (5) mit Gas, umfassend mindestens einen Kompressor (13), der so konfiguriert ist, dass er das im Dampfzustand in den Tank (8) aufgenommene Gas auf einen mit den Anforderungen der Niederdruck-Gasverbrauchsvorrichtung (5) kompatiblen Druck komprimiert,
- eine Gasrücklaufleitung (14), die an den zweiten Versorgungskreislauf (3) stromabwärts des Kompressors (13) angeschlossen ist und sich bis zum Tank (8) erstreckt.
- mindestens ein erster Wärmetauscher (6), der so konfiguriert ist, dass er Wärme zwischen dem im Rücklaufleitung (14) zirkulierenden Gas im Dampfzustand und dem im ersten Gaszufuhrkreislauf (2) zirkulierenden Gas im flüssigen Zustand austauscht.
- der erste Gaszufuhrkreislauf (2) umfasst eine zusätzliche Pumpe (10),
**dadurch gekennzeichnet, dass** das Versorgungssystem (1) mindestens einen zweiten Wärmetauscher (7) umfasst, der so konfiguriert ist, dass er Wärme zwischen dem im Rücklaufleitung (14) zirkulierenden Gas im Dampfzustand und dem im ersten Gaszufuhrkreislauf (2) zirkulierenden Gas im flüssigen Zustand austauscht, wobei die zusätzliche Pumpe (10) zwischen dem ersten Wärmetauscher (6) und dem zweiten Wärmetauscher (7) angeordnet ist.

2. Das Versorgungssystem (1) nach Anspruch 1, wobei die Rücklaufleitung (14) einen Abzweigpunkt (53) aufweist, der die Rücklaufleitung (14) in einen ersten Abschnitt (51) und einen zweiten Abschnitt (52) teilt, die sich beide vom Abzweigpunkt (53) bis zum Tank (8) erstrecken, wobei der erste Wärmetauscher (6) so konfiguriert ist, dass er Wärme zwischen dem im ersten Abschnitt (51) der Rücklaufleitung (14) im Dampfzustand zirkulierenden Gas und dem im ersten Gaszufuhrkreislauf (2) zirkulierenden flüssigen Gas austauscht, wobei der zweite Abschnitt (52) den ersten Wärmetauscher (6) umgeht.

3. Das Versorgungssystem (1) nach dem vorhergehenden Anspruch, wobei der Abzweigpunkt (53) in der Rücklaufleitung (14) zwischen dem ersten Wärmetauscher (6) und dem zweiten Wärmetauscher (7) angeordnet ist.

4. Das Versorgungssystem (1) nach Anspruch 2, wobei der Abzweigpunkt (53) auf der Rücklaufleitung (14) zwischen dem Anschluss an den zweiten Versorgungskreislauf (3) und dem zweiten Wärmetauscher (7) angeordnet ist, wobei der erste Abschnitt (51) und der zweite Abschnitt (52) den zweiten Wärmetauscher (7) durchlaufen.

5. Das Versorgungssystem (1) nach einem der Ansprüche 2 bis 4, wobei der zweite Abschnitt (52) der Rücklaufleitung (14) ein Ende aufweist, das in die im Tank (8) enthaltene Flüssigkeit eingetaucht ist, und der zweite Abschnitt (52) ein Ausstoßelement (55) aufweist, das am eingetauchten Ende angeordnet ist.

6. Das Versorgungssystem (1) nach einem der Ansprüche 2 bis 5, wobei der zweite Abschnitt (52) der Rücklaufleitung (14) ein Durchflussregelelement (54) umfasst.

7. Das Versorgungssystem (1) nach einem der vorhergehenden Ansprüche, wobei der erste Wärmetauscher (6) so ausgelegt ist, dass er das in der Rücklaufleitung (14) zirkulierende Gas kondensiert.

8. Das Versorgungssystem (1) nach einem der vorhergehenden Ansprüche, wobei der zweite Wärmetauscher (7) so konfiguriert ist, dass er das in der Rücklaufleitung (14) zirkulierende Gas vorkühlt.

9. Das Versorgungssystem (1) nach einem der vorhergehenden Ansprüche, wobei die Rücklaufleitung (14) ein Expansionsglied (15) aufweist, das stromabwärts des ersten Wärmetauschers (6) angeordnet ist.

10. Das Versorgungssystem (1) nach einem der vorhergehenden Ansprüche, umfassend eine Hilfsversorgungsleitung (16), die mit dem ersten Gaszufuhrkreislauf (2) stromaufwärts des ersten Wärmetauschers (6) verbunden ist und sich bis zum zweiten Versorgungskreislauf (3) stromabwärts des Kompressors (13) erstreckt, wobei das Versorgungssystem (1) einen Niederdruckverdampfer (17) umfasst, der zum Verdampfen des in der Hilfsversorgungsleitung (16) zirkulierenden Gases ausgelegt ist.

11. Das Versorgungssystem (1) nach einem der vorhergehenden Ansprüche, wobei die Pumpe (9) so konfiguriert ist, dass sie den Druck des Gases im flüssigen Zustand auf einen Wert zwischen 6 und 17 bar erhöht, und die zusätzliche Pumpe (10) so konfiguriert ist, dass sie den Druck des Gases im flüssigen Zustand auf einen Wert zwischen 30 und 400 bar erhöht.

12. Das Versorgungssystem (1) nach einem der vorhergehenden Ansprüche, wobei der Kompressor (13) so konfiguriert ist, dass er den Druck des Gases auf einen Wert zwischen 6 und 20 bar absolut erhöht.

13. Das Versorgungssystem nach einem der vorhergehenden Ansprüche, wobei der Hochdruckverdampfer (11) nach dem zweiten Wärmetauscher (7) im ersten Gasversorgungskreislauf (2) der Hochdruckgasverbrauchsvorrichtung (4) angeordnet ist.

14. Das Versorgungssystem nach einem der vorhergehenden Ansprüche, wobei der zweite Wärmetauscher (7) und der Hochdruckverdampfer (11) einen einzigen Wärmetauscher (21) bilden.

15. Eine schwimmende Struktur (20) zum Speichern und/oder Transportieren von Gas im flüssigen Zustand, umfassend mindestens einen Tank (8) für Gas im flüssigen Zustand, mindestens eine Hochdruckgasverbrauchsvorrichtung (4), mindestens eine Niederdruck-Gasverbrauchsvorrichtung (5) und mindestens ein System (1) zur Gasversorgung dieser Vorrichtungen gemäß einem der vorhergehenden Ansprüche.

16. Ein System zum Be- und Entladen von Flüssiggas, das mindestens eine landseitige und/oder Hafeneinrichtung (27) und mindestens eine schwimmende Struktur (20) zum Lagern und/oder Transportieren von Flüssiggas gemäß dem vorhergehenden Anspruch kombiniert.

17. Verfahren zum Be- und Entladen von Flüssiggas von einer schwimmenden Struktur (20) zur Speicherung und/oder zum Transport von Gas nach Anspruch 15, wobei auf einem Oberdeck der schwimmenden Struktur (20) angeordnete Rohrleitungen (23) zum Be- und/oder Entladen von Gas im flüssigen Zustand mittels geeigneter Verbindungsstücke mit einem See- oder Hafenterminal verbunden werden können, um das Gas im flüssigen Zustand in den Tank (8) oder von dort zu transportieren.

## Claims

1. A system (1) for supplying gas to at least one high-pressure gas consuming apparatus (4) and at least one low-pressure gas consuming apparatus (5) of a floating structure (20) comprising at least one tank (8) configured to contain the gas, the supply system (1) comprising:
- at least a first gas supply circuit (2) of the high-pressure gas consuming apparatus (4), comprising at least one pump (9) configured to pump the gas collected in the liquid state into the tank (8),
- at least one high-pressure evaporator (11) configured to evaporate the gas circulating in the first gas supply circuit (2),
- at least one second circuit (3) supplying gas to the low-pressure gas-consuming apparatus (5), comprising at least one compressor (13) configured to compress gas taken in the vapor state into the tank (8) to a pressure compatible with the requirements of the low-pressure gas-consuming apparatus (5),
- a gas return line (14) connected to the second supply circuit (3) downstream of the compressor (13) and extending to the tank (8),
- at least a first heat exchanger (6) configured to exchange heat between the gas circulating in the return line (14) in the vapor state and the gas in the liquid state circulating in the first supply circuit (2),
- the first supply circuit (2) comprises an additional pump (10),
**characterized in that** the supply system (1) comprises at least a second heat exchanger (7) configured to exchange heat between the gas circulating in the return line (14) in the vapor state and the gas in the liquid state circulating in the first supply circuit (2), said additional pump (10) being interposed between the first heat exchanger (6) and the second heat exchanger (7).

2. The supply system (1) according to claim 1, wherein the return line (14) comprises a divergence point (53) dividing the return line (14) into a first section (51) and a second section (52) both extending from the divergence point (53) to the tank (8), the first heat exchanger (6) being configured to exchange heat between the gas circulating in vapor state in the first section (51) of the return line (14) and the liquid-state gas circulating in the first supply circuit (2), the second section (52) bypassing the first heat exchanger (6).

3. The supply system (1) according to the preceding claim, wherein the divergence point (53) is arranged on the return line (14) between the first heat exchanger (6) and the second heat exchanger (7).

4. The supply system (1) according to claim 2, wherein the divergence point (53) is arranged on the return line (14), between the connection to the second supply circuit (3) and the second heat exchanger (7), the first section (51) and the second section (52) passing through the second heat exchanger (7).

5. The supply system (1) according to any one of claims 2 to 4, wherein the second section (52) of the return line (14) comprises one end submerged in the liquid contained in the tank (8), the second section (52) comprising an ejection member (55) arranged at the submerged end.

6. The supply system (1) according to any one of claims 2 to 5, wherein the second section (52) of the return line (14) comprises a flow control member (54).

7. The supply system (1) according to any one of the preceding claims, wherein the first heat exchanger (6) is configured to condense the gas circulating in the return line (14).

8. The supply system (1) according to any one of the preceding claims, wherein the second heat exchanger (7) is configured to pre-cool the gas circulating in the return line (14).

9. The supply system (1) according to any one of the preceding claims, wherein the return line (14) comprises an expansion member (15) arranged downstream of the first heat exchanger (6).

10. The supply system (1) according to any one of the preceding claims, comprising an auxiliary supply line (16) connected to the first supply circuit (2), upstream of the first heat exchanger (6), and extending to the second supply circuit (3), downstream of the compressor (13), the supply system (1) comprising a low-pressure evaporator (17) configured to evaporate the gas circulating in the auxiliary supply line (16).

11. The supply system (1) according to any one of the preceding claims, wherein the pump (9) is configured to raise a pressure of the gas in the liquid state to a value of between 6 and 17 bar and the additional pump (10) is configured to raise the pressure of the gas in the liquid state to a value of between 30 and 400 bar.

12. The supply system (1) according to any one of the preceding claims, wherein the compressor (13) is configured to raise a pressure of the gas to a value of between 6 and 20 bar absolute.

13. The supply system according to any one of the preceding claims, wherein the high-pressure evaporator (11) is arranged downstream of the second heat exchanger (7) on the first gas supply circuit (2) of the high-pressure gas consuming apparatus (4).

14. The supply system according to any one of the preceding claims, wherein the second heat exchanger (7) and the high-pressure evaporator (11) form a single heat exchanger (21).

15. A floating structure (20) for storing and/or transporting gas in the liquid state, comprising at least one tank (8) for gas in the liquid state, at least one high-pressure gas consuming apparatus (4), at least one low-pressure gas consuming apparatus (5) and at least one system (1) for supplying gas to these apparatuses according to any one of the preceding claims.

16. A system for loading or unloading a liquid gas which combines at least one onshore and/or port facility (27) and at least one floating structure (20) for storing and/or transporting liquid gas according to the preceding claim.

17. A method for loading or unloading a liquid gas from a floating structure (20) for storing and/or transporting gas according to claim 15, wherein pipes (23) for loading and/or unloading gas in the liquid state arranged on an upper deck of the floating structure (20) can be connected, by means of appropriate connectors, to a maritime or port terminal in order to transfer the gas in the liquid state to or from the tank (8).
